# EUROPÄISCHE PATENTSCHRIFT

(11) **EP 2 774 074 B1**
(45) Veröffentlichungstag und Bekanntmachung des Hinweises auf die Patenterteilung: **30.12.2015**
(21) Anmeldenummer: 12777891.8
(22) Anmeldetag: 15.10.2012
(51) Int. Cl.: G06F 21/31

(54) **DOKUMENT, VERFAHREN ZUR AUTHENTIFIZIERUNG EINES BENUTZERS, INSBESONDERE ZUR FREISCHALTUNG EINER CHIPKARTENFUNKTION, UND COMPUTERSYSTEM**
DOCUMENT, PROCESS FOR AUTHENTICATING A USER, MORE PARTICULARLY FOR RELEASING A SMART-CARD FUNCTION, AND COMPUTER SYSTEM
DOCUMENT, PROCÉDÉ D'AUTHENTIFICATION D'UN UTILISATEUR, EN PARTICULIER POUR VALIDER UNE FONCTION D'UNE CARTE À PUCE, ET SYSTÈME INFORMATIQUE

(30) Priorität: 01.11.2011 DE 102011085538
(43) Veröffentlichungstag der Anmeldung: 10.09.2014
(73) Patentinhaber: Bundesdruckerei GmbH, 10969 Berlin (DE); Humboldt-Universität zu Berlin, 10099 Berlin (DE)
(72) Erfinder: BASTIAN, Paul, 10243 Berlin (DE); DIETRICH, Frank, 12437 Berlin (DE); PAESCHKE, Manfred, 16348 Wandlitz (DE); MÜLLER, Wolf, 10437 Berlin (DE)
(74) Vertreter: Richardt Patentanwälte PartG mbB
(86) Internationale Anmeldenummer: PCT/EP2012/070368
(87) Internationale Veröffentlichungsnummer: WO 2013/064359

(56) Entgegenhaltungen:
- WO-A1-99/08239
- GB-A- 2 379 525
- GB-A- 2 431 268
- US-A- 5 940 511
- US-A1- 2004 068 469
- ing-diba: "Internetbanking + Brokerage", , 4. Januar 2013 (2013-01-04), XP002689717, Gefunden im Internet: URL:https://www.ing-diba.de/kundenservice/ banking-und-brokerage/#!01090 [gefunden am 2013-01-04]

## Beschreibung

Zur Freischaltung einer Chipkartenfunktion kann eine zuvorige Authentisierung des Nutzers gegenüber der Chipkarte erforderlich sein, wie es aus dem Stand der Technik an sich bekannt ist. Hierzu kann der Nutzer Authentisierungsdaten über ein Lesegerät in die Chipkarte eingeben. Beispielsweise erfolgt dies durch die Eingabe einer geheimen Zeichenfolge, welche im Allgemeinen als PIN (Personal Identification Number) bezeichnet wird.

Zur Authentisierung wird die PIN von dem Nutzer über die Tastatur eines Chipkarten-Terminals oder eines Computers, an dem ein Chipkarten-Leser angeschlossen ist, eingegeben, und dann zu der Chipkarte gesendet. Diese vergleicht die eingegebene PIN mit der gespeicherten PIN und teilt dann das Ergebnis dem Terminal bzw. dem Computer durch Ausgabe eines entsprechenden Signals mit.

Der Erfindung liegt demgegenüber die Aufgabe zugrunde, ein verbessertes Dokument, ein Verfahren zur Authentifizierung eines Nutzers gegenüber einem Dokument und ein Computersystem zu schaffen. Ausführungsformen der Erfindung sind in den abhängigen Patentansprüchen angegeben.

Nach Ausführungsformen der Erfindung hat ein erfindungsgemäßes Dokument einen geschützten nicht-flüchtigen Speicherbereich zur Speicherung einer geheimen Kennung, wie zum Beispiel einer PIN. Der geschützte nicht-flüchtige Speicherbereich ist vorzugsweise so ausgebildet, dass lediglich ein Prozessor des Dokuments auf diesen geschützten Speicherbereich zugreifen kann, wobei schaltungstechnisch ein externer schreibender oder lesender Zugriff auf dem geschützten Speicherbereich ausgeschlossen ist.

Die geheime Kennung wird durch eine n-stellige Zeichenfolge aus einem vordefinierten Zeichensatz gebildet. Beispielsweise kann es sich um eine PIN einer Länge zwischen 4 und 12 Ziffern oder alphanumerischen Zeichen handeln, beispielsweise gemäß ISO 9564-1. Je nach Ausführungsform kann der vordefinierte Zeichensatz rein numerisch sein, das heißt die Ziffern zwischen 0 und 9 beinhalten, oder es handelt sich um einen alphanumerischen Zeichensatz, der die Ziffern von 0 - 9 sowie die Groß- und/oder Kleinbuchstaben des Alphabets mit oder ohne Sonderzeichen beinhaltet.

Das Dokument hat Zufallsgeneratormittel zur Auswahl zumindest eines Zeichens aus dem vordefinierten Zeichensatz. Das zumindest eine zufällig ausgewählte Zeichen dient zur Ersetzung einer der Zeichen der ersten Zeichenfolge, um so eine zweite n-stellige Zeichenfolge zu definieren. Diejenige Stelle der ersten Zeichenfolge, deren Zeichen durch das zufällig ausgewählte Zeichen zu ersetzen ist, kann fest vordefiniert oder veränderlich sein, insbesondere kann auch die Stelle der ersten Zeichenfolge, deren Zeichen durch das zufällig ausgewählte Zeichen ersetzt werden soll, ebenfalls mit Hilfe der Zufallsgeneratormittel zufällig ausgewählt werden.

Das oder die zufällig ausgewählten Zeichen werden in einem flüchtigen Speicherbereich des Dokuments gespeichert. Über eine Anzeigevorrichtung des Dokuments werden die zufällig ausgewählten Zeichen ausgegeben.

Zu seiner Authentifizierung muss ein Nutzer dann an den vordefinierten oder zufällig ausgewählten Stellen der ersten Zeichenfolge, welche ihm bekannt ist, jeweils die betreffenden Zeichen durch die auf der Anzeigevorrichtung angezeigten Zeichen ersetzen. Die so erhaltene dritte Zeichenfolge gibt der Nutzer über Eingabemittel des Dokuments in das Dokument ein. Das Dokument verfügt über Prozessormittel zur Authentifizierung des Nutzers gegenüber dem Dokument. Zur Durchführung der Authentifizierung greifen die Prozessormittel auf den nicht-flüchtigen Speicherbereich und auf den flüchtigen Speicherbereich zu, um auf diese Art und Weise die zweite Zeichenfolge zu lesen. Die zweite Zeichenfolge wird dann mit der von dem Nutzer eingegebenen dritten Zeichenfolge auf Übereinstimmung überprüft, um den Nutzer zu authentifizieren.

Ausführungsformen der Erfindung sind besonders vorteilhaft, da ein Keylogger-Angriff abgewehrt werden kann, ohne dass ein Klasse II- oder Klasse III-Chipkarten-Lesegerät, beispielsweise gemäß BSI TR-03119 Cat-B Leser, erforderlich ist. Selbst wenn es einem Angreifer gelingt, die von dem Nutzer zum Beispiel über eine Tastatur eines Computers eingegebene dritte Zeichenfolge abzuhören, so kann ein solcher Angreifer die abgehörte Zeichenfolge für eine nachfolgende betrügerische Authentifizierung gegenüber dem Dokument nicht erfolgreich verwenden, da sich die zweite Zeichenfolge für eine nachfolgende Authentifizierung aufgrund der zufälligen Ersetzung von Zeichen in der ersten Zeichenfolge dann bereits wieder geändert hat.

Nach einer Ausführungsform der Erfindung sind die Zufallsgeneratormittel so ausgebildet, dass eine Anzahl von m Zeichen aus dem vordefinierten Zeichensatz ausgewählt werden, wobei die Differenz aus der Anzahl der Stellen n der ersten Zeichenfolge und der Anzahl m der ausgewählten Zeichen beispielsweise 4 beträgt, sodass die zweite n-stellige Zeichenfolge durch die Ersetzung einer Anzahl von m Zeichen der ersten Zeichenfolge durch die ausgewählten Zeichen definiert ist.

Dies hat den Vorteil, dass mindestens vier Zeichen der zweiten Zeichenfolge nicht auf der Anzeigevorrichtung des Dokuments angezeigt werden, sodass selbst dann, wenn ein Angreifer die Zeichen von der Anzeigevorrichtung abliest, wie z.B. mit einer versteckten Kamera, es extrem unwahrscheinlich ist, dass der Angreifer die verbleibenden vier Zeichen errät.

Von weiterem besonderem Vorteil ist ferner, dass auch bei einem Diebstahl der Dieb nicht in den Besitz der vollständigen Zeichenfolge gelangt, die zu der Authentifizierung erforderlich ist, da auf der Anzeigevorrichtung des Dokuments nur einige der Stellen dieser Zeichenfolge angezeigt werden, aber nicht alle. Ohne Kenntnis der fest vorgegebenen statischen Zeichenfolge, d.h. der ersten Zeichenfolge, kann also auch in diesem Fall kein Missbrauch erfolgen
Nach einer Ausführungsform der Erfindung sind die Zufallsgeneratormittel zur zufälligen Auswahl derjenigen Stellen der ersten Zeichenfolge ausgebildet, deren Zeichen durch die zufällig ausgewählten Zeichen zur Definition der zweiten Zeichenfolge ersetzt werden. Dadurch, dass nicht nur die Zeichen, sondern auch deren Stellen in der ersten Zeichenfolge zufällig sind, wird die Sicherheit weiter erhöht.

Nach einer Ausführungsform der Erfindung ist die Anzeigevorrichtung dazu ausgebildet, dem Nutzer die Stellen der ersten Zeichenfolge, deren Zeichen durch die zufällig ausgewählten Zeichen zur Definition der zweiten Zeichenfolge ersetzt werden, zu signalisieren.

Dies kann so erfolgen, dass die entsprechende Information im Klartext für den Nutzer auf der Anzeigevorrichtung ausgegeben wird, beispielsweise in der Form "Ersetzen Sie die zweite Stelle der PIN durch 8 und ersetzen Sie die fünfte Stelle der PIN durch 2" oder durch Ausgabe einer anderen Nachricht gleichen Inhalts. Alternativ kann eine solche Signalisierung auch auf akustischem Wege erfolgen.

Nach einer Ausführungsform der Erfindung erfolgt die Anzeige der zufällig ausgewählten Zeichen und der betreffenden Stellen, die ebenfalls zufällig ausgewählt sein können, durch Anzeige einer vierten n-stelligen Zeichenfolge auf der Anzeigevorrichtung. Die vierte Zeichenfolge beinhaltet dabei die zufällig ausgewählten Zeichen, die an denjenigen Stellen der vierten Zeichenfolge angegeben werden, an denen sie die Zeichen in der ersten Zeichenfolge ersetzen sollen. Die übrigen Stellen der vierten Zeichenfolge werden mit einem Zeichen oder einem Symbol aufgefüllt, welches nicht aus dem Zeichensatz ist, aus dem die erste Zeichenfolge aufgebaut ist. Wenn es sich bei dem Zeichensatz um einen numerischen Zeichensatz handelt, kann es sich zum Beispiel bei diesen Zeichen um Buchstaben handeln. Wenn es sich bei dem Zeichensatz um einen alphanumerischen Zeichensatz handelt, kann es sich bei den Zeichen, die zur Auffüllung der vierten Zeichenfolge dienen, zum Beispiel um ein Sonderzeichen oder Symbol handeln, welches nicht zu dem Zeichensatz gehört.

Nach einer Ausführungsform der Erfindung sind die Prozessormittel so ausgebildet, dass die ausgewählten Zeichen nach der Authentifizierung des Nutzers aus dem flüchtigen Speicherbereich gelöscht werden. Diese kann nach jeder Authentifizierung oder spätestens durch jede Authentifizierungsanforderung erfolgen. Insbesondere können die ausgewählten Zeichen dadurch gelöscht werden, dass sie durch für eine nachfolgende Authentifizierung ausgewählte Zeichen überschrieben werden.

Nach einer Ausführungsform der Erfindung hat das Dokument eine drahtlose Schnittstelle zur Kommunikation mit einem Lesegerät und zur Einkopplung von Energie. Beispielsweise beinhaltet die drahtlose Schnittstelle eine Antenne zur Einkopplung eines elektromagnetischen Wechselfeldes, beispielsweise nach einem RFID- oder NFC-Verfahren. Sobald Energie in das Dokument eingekoppelt wird, startet der Prozessor des Dokuments automatisch die Ausführung eines Programms, um die Authentifizierung des Nutzers gegenüber dem Dokument durchzuführen. Nachdem diese Authentifizierung erfolgt ist, wird zum Beispiel eine Chipkartenfunktion des Dokuments freigeschaltet.

Nach einer Ausführungsform der Erfindung hat das Dokument ein Chipkarten-Betriebssystem, welches einen Zufallsgenerator beinhaltet. Durch den Prozessor des Dokuments wird ein Programm ausgeführt, welches mit Hilfe einer von dem Zufallsgenerator gelieferten Zufallszahl die Auswahl der Zeichen aus dem vordefinierten Zeichensatz vornimmt.

Unter einem "Dokument" werden erfindungsgemäß insbesondere papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher und ein Prozessor sowie eine Anzeigevorrichtung integriert ist.

Bei der Anzeigevorrichtung des Dokuments kann es sich um eine elektrophoretische oder elektrochrome Anzeige, eine bistabile Anzeige, eine Drehelementanzeige, insbesondere sog. elektronisches Papier ("E-Paper"), eine LED-Anzeige, insbesondere eine anorganische, organische oder Hybrid-LED-Anzeige, eine LCD-Anzeige in verschiedenen Ausführungsformen (zum Beispiel Twisted Nematic, Super Twisted Nematic, cholesterisch, nematisch), eine ferroelektrische Anzeige, eine Anzeige auf der Basis des Elektrowetting-Effekts, eine Anzeige auf Basis interferometrischer Modulatorelemente (IMOD), eine Hybridanzeige oder eine Anzeige mit einem flexiblen Display handeln.

In einem weiteren Aspekt betrifft die Erfindung ein Verfahren zur Authentifizierung eines Nutzers gegenüber einem Dokument mit folgenden Schritten:
- zufällige Auswahl zumindest eines Zeichens aus dem vordefinierten Zeichensatz zur Ersetzung zumindest eines Zeichens der ersten Zeichenfolge an zumindest einer i-ten Stelle der ersten Zeichenfolge, sodass dadurch die zweite Zeichenfolge definiert ist, wobei die Anzahl A der Stellen der ersten Zeichenfolge, an denen Zeichen ersetzt werden, kleiner als n sein muss, d.h. es dürfen nicht sämtliche Zeichen der ersten Zeichenfolge ersetzt werden. Mit anderen Worten muss für die Anzahl A gelten: 0 < A < n.
- Anzeige des zumindest einen zufällig ausgewählten Zeichens auf der Anzeigevorrichtung,
- Empfang der dritten Zeichenfolge,
- Prüfung, ob die dritte Zeichenfolge mit der zweiten Zeichenfolge übereinstimmt, und wenn dies der Fall ist, Erzeugung eines Authentifizierungssignals zur Signalisierung einer erfolgreichen Authentifizierung des Nutzers.

In einem weiteren Aspekt betrifft die Erfindung ein Computersystem mit einem Computer, einem Dokument und einem Lesegerät für das Dokument, wobei auf dem Computer ein Anwendungsprogramm zur Interaktion mit dem Dokument installiert ist, wobei das Anwendungsprogramm zur Ausgabe einer Authentifizierungsanforderung an den Nutzer ausgebildet ist, und wobei der Computer eine Eingabevorrichtung aufweist, über die der Nutzer die dritte Zeichenfolge in den Computer zur Weiterleitung an das Dokument über das Lesegerät eingeben kann.

Insbesondere ist hierbei vorteilhaft, dass auch dann, wenn der Computer mit einem öffentlichen Computernetzwerk, wie zum Beispiel dem Internet, verbunden ist, ein wirksamer Schutz gegen das sogenannte Keylogging gegeben ist.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Dokuments und eines erfindungsgemäßen Computersystems,
- Figur 2: ein Flussdiagramm zur Darstellung der Abwehr eines Angriffs,
- Figur 3: ein Flussdiagramm einer Ausführungsform eines erfindungsgemäßen Verfahrens,
- Figur 4: ein UML-Diagramm einer Ausführungsform eines erfindungsgemäßen Verfahrens.

Identische oder einander entsprechende Elemente der nachfolgenden Ausführungsformen werden jeweils mit denselben Bezugszeichen gekennzeichnet.

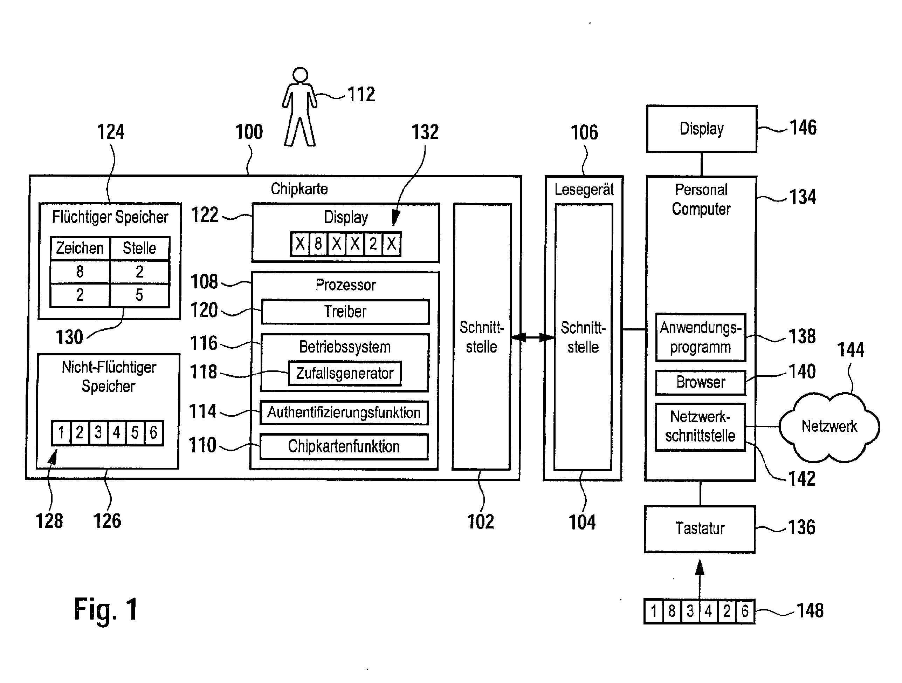

Die Figur 1 zeigt ein Dokument 100, welches hier als Chipkarte ausgebildet ist, beispielsweise in einem standardisierten Chipkartenformat. Das Dokument 100 hat eine Schnittstelle 102, die zur Kommunikation mit einer entsprechenden Schnittstelle 104 eines Lesegeräts 106 ausgebildet ist. Die Schnittstellen 102 und 104 können als kontaktbehaftete oder kontaktlose Schnittstellen ausgebildet sein, insbesondere nach einem RFID- oder NFC-Verfahren. Insbesondere können die Schnittstellen 102 und 104 so ausgebildet sein, dass von der Schnittstelle 104 in die Schnittstelle 102 durch ein elektromagnetisches Wechselfeld Energie zur Energieversorgung des Dokuments 100 eingekoppelt wird. Besonders bevorzugt erfolgt dies bei einer Frequenz des Wechselfeldes im Kilohertz- oder Megahertzbereich, vorzugsweise 13,56 MHz gemäß ISO 14443.

Bei dem Lesegerät 106 kann es sich um einen sogenannten Klasse 1-Chipkarten-Leser handeln, das heißt einen Chipkarten-Leser ohne Tastatur und ohne eigene Anzeige.

Das Dokument 100 hat zumindest einen Prozessor 108 zur Ausführung einer Chipkartenfunktion 110. Bei der Chipkartenfunktion 110 kann es sich zum Beispiel um eine Bezahlfunktion zur Durchführung einer Finanztransaktion, eine Signaturfunktion zur Erzeugung einer elektronischen Signatur, eine Ver- oder Entschlüsselungsfunktion, eine Funktion zur Zugangskontrolle, oder eine Funktion zur Verfügungstellung der digitalen Identität des Nutzers des Chipkarte 100 handeln, wie sie zum Beispiel für die die sogenannte "AusweisApp" benötigt wird. Die AusweisApp ist an sich aus dem Stand der Technik bekannt, ist nämlich für den neuen elektronischen Personalausweis der Bundesrepublik Deutschland implementiert, vergleiche hierzu auch DE 10 2008 000 067, DE 10 2010 028 133.6-31, sowie BSI TR-03103-7.

Eine Voraussetzung für die Nutzung der Chipkartenfunktion 110 ist, dass diese zuvor freigeschaltet werden muss, was eine Authentifizierung des Nutzers 112 gegenüber dem Dokument 100 voraussetzt. Hierzu hat das Dokument 100 ein Programmmodul 114, welches eine Authentifizierungsfunktion zur Authentifizierung des Nutzers 112 gegenüber dem Dokument 100 implementiert. Aufgrund einer erfolgreichen Authentifizierung schaltet das Programmmodul 114 die Chipkartenfunktion 110 frei.

Das Dokument 100 hat ferner ein Betriebssystem 116, insbesondere ein Chipkarten-Betriebssystem, sowie einen Zufallsgenerator 118, der als Pseudozufallszahlengenerator als eine Funktion des Betriebssystems 116 implementiert sein kann. Der Zufallsgenerator 118 kann aber auch schaltungstechnisch implementiert sein, vergleiche zum Beispiel IEEE Spektrum, September 2011, "Behind Intel's New Random-Number Generator".

Der Prozessor 108 kann einen Treiber 120 für eine Anzeigevorrichtung, das heißt ein Display 122 des Dokuments 100 aufweisen. Alternativ kann der Treiber 120 als separate Schaltungskomponente oder als integraler Bestandteil des Displays 122 ausgebildet sein.

Das Display 122 sowie die weiteren Komponenten des Dokuments 100 sind vorzugsweise in einen Dokumentenkörper des Dokuments 100 integriert. Beispielsweise kann der Dokumentenkörper des Dokuments 100 mehrschichtig ausgebildet sein.

Bei dem Display 122 kann es sich zum Beispiel um ein bistabiles Display, insbesondere ein sogenanntes Electronic Paper, oder eine andere Anzeigevorrichtung handeln.

Das Dokument 100 hat einen oder mehrere elektronische Speicher. Insbesondere hat das Dokument 100 einen flüchtigen Speicherbereich 124, bei dem es sich beispielsweise um einen Arbeitsspeicher des Prozessors 108 handelt. Ferner hat das Dokument einen nicht-flüchtigen Speicherbereich 126, der zur Speicherung einer geheimen Kennung 128 des Nutzers 112 dient. Bei der Kennung 128 handelt es sich um eine n-stellige Zeichenfolge aus einem vordefinierten Zeichensatz, wobei n hier ohne Beschränkung der Allgemeinheit gleich 6 ist und es sich bei dem Zeichensatz um die Ziffern zwischen 0 und 9 handelt. Die Kennung 128 lautet in dem hier betrachteten Ausführungsbeispiel "123456". Die Kennung 128 wird auch als PIN des Nutzers 112 bezeichnet.

Der Speicherbereich 126 ist vorzugsweise schaltungstechnisch so ausgebildet, dass ein externer Zugriff auf den Speicherbereich 126 über die Schnittstelle 102 grundsätzlich nicht möglich ist, sondern dass ein solcher Zugriff nur durch den Prozessor 108 erfolgen kann. Vorzugsweise gilt dies ebenso für den Speicherbereich 124. Dies ist insbesondere dann der Fall, wenn es sich bei dem Speicherbereich 124 um einen Arbeitsspeicher des Prozessors 108 handelt, der nur von dem Prozessor 108 selbst, nicht aber über die Schnittstelle 102 adressierbar ist.

Der Speicherbereich 124 dient zur Speicherung einer Anzahl von m Zeichen, wobei m < n ist, und wobei die m Zeichen mit Hilfe des Zufallsgenerators 118 ausgewählt werden. Ferner kann der Speicherbereich 124 auch zur Speicherung je einer Zuordnung eines der zufällig ausgewählten Zeichen zu einer Stelle der Kennung 128 dienen, wobei die einem ausgewählten Zeichen zugeordnete Stelle diejenige Stelle in der Kennung 128 identifiziert, deren Zeichen durch das betreffende ausgewählte Zeichen zu ersetzen ist. Die zufällig ausgewählten Zeichen und die jeweiligen Stellen können zum Beispiel in eine Zuordnungstabelle 130 oder in einem anderen Datenformat in den Speicherbereich 124 gespeichert werden.

Das Display 122 dient zur Ausgabe der zufällig ausgewählten Zeichen für den Nutzer 112, sodass dieser die zufällig ausgewählten Zeichen von dem Display 122 ablesen kann. Vorzugsweise werden auch die entsprechenden Stellen, denen die ausgewählten Zeichen zugeordnet sind, entsprechend der Zuordnungstabelle 130 auf dem Display 122 ausgegeben. Dies ist insbesondere dann erforderlich, wenn die Stellen und - je nach Ausführungsform - auch die Anzahl der Stellen zufällig variiert werden können.

Die Anzeige der ausgewählten Zeichen und der jeweils zugeordneten Stellen kann im Klartext auf dem Display 122 erfolgen oder durch Ausgabe einer Zeichenfolge 132. Die Zeichenfolge 132 hat dieselbe Anzahl n von Stellen wie die Kennung 128. An den in der Zuordnungstabelle 130 angegebenen Stellen beinhaltet die Zeichenfolge 132 das jeweils der betreffenden Stelle zugeordnete ausgewählte Zeichen. Dies bedeutet bei dem hier betrachteten Beispiel, dass die Zeichenfolge 132 an ihrer zweiten Stelle das Zeichen 8 aufweist und an ihrer fünften Stelle das Zeichen 2.

An allen anderen Stellen, das heißt an der ersten, dritten, vierten und sechsten Stelle, hat die Zeichenfolge 132 dagegen jeweils ein X, das heißt ein Zeichen, welches nicht in dem vordefinierten Zeichensatz beinhaltet ist. Alternativ können diese Stellen statt einheitlich mit einem X, mit verschiedenen Buchstaben oder Sonderzeichen belegt sein, welche ebenfalls zufällig ausgewählt sein können, unter der Voraussetzung, dass dem Nutzer 112 zum Beispiel anlässlich der Mitteilung der Kennung 128 ebenfalls mitgeteilt worden ist, dass es sich hier bei dem vordefinierten Zeichensatz um die Ziffern von 0 bis 9 handelt.

Das Lesegerät 106 ist an einen Computer 134 angeschlossen oder in diesen integriert. Bei dem Computer 134 kann es sich zum Beispiel um einen Personal Computer (PC), einen Tablet Computer, ein Smartphone oder ein anders elektronisches Gerät handeln.

Der Computer 134 hat eine Eingabevorrichtung 136, wie zum Beispiel eine Spracheingabevorrichtung oder eine Tastatur. Auf dem Computer 134 ist beispielsweise ein Anwendungsprogramm 138 installiert, wie zum Beispiel die sogenannte AusweisApp oder ein anderes Anwendungsprogramm, welches sich der Chipkartenfunktion 110 bedienen kann. Auf dem Computer 134 kann ferner ein Intemetbrowser 140 installiert sein, um über eine Netzwerk-Schnittstelle 142 auf ein öffentliches Netzwerk 144, wie zum Beispiel das Internet, zuzugreifen. Ferner ist an den Computer 134 ein Display 146 angeschlossen oder der Computer 134 beinhaltet ein solches Display 146 als integralen Bestandteil.

Zur Nutzung des Dokuments 100 bringt der Nutzer 112 das Dokument in die Reichweite des Lesegeräts 106, indem er beispielsweise das Dokument 100 in das Lesegerät 106 einführt oder bei einer kontaktlosen Ausbildung auf das Lesegerät 106 auflegt. Über die Schnittstelle 104 wird dann Energie in das Dokument 100 eingekoppelt, sodass eine Betriebsspannung zum Betrieb der verschiedenen Komponenten des Dokuments 100 zur Verfügung steht.

Wenn das Anwendungsprogramm 138 die Chipkartenfunktion 110 benötigt, so sendet es eine entsprechende Anforderung über das Lesegerät 106 an das Dokument 100, beispielsweise in Form einer sogenannten APDU. Zur Freischaltung der Chipkartenfunktion 110 wird daraufhin zunächst das Programmmodul 114 gestartet, damit sich der Nutzer 112 gegenüber dem Dokument 100 authentifiziert. Hierzu werden zunächst ein oder mehrere Zeichen der Kennung 128 durch zufällig ausgewählte Zeichen ersetzt, wobei die Stellen und deren Anzahl in der Kennung 128 deren Zeichen durch zufällig ausgewählte Zeichen ersetzt werden sollen, vordefiniert oder ebenfalls zufällig sein können. Für den Fall, dass die Stellen und deren Anzahl vordefiniert sind, können diese dem Nutzer 112 zum Beispiel anlässlich der Mitteilung der Kennung 128, zum Beispiel in einem sogenannten PIN-Brief, ebenfalls mitgeteilt werden. Die Stellen und deren Anzahl müssen dann nicht auf dem Display 122 angezeigt werden.

Bei der hier betrachteten Ausführungsform ist beispielsweise die Anzahl m der Stellen, an denen die Zeichen in der Kennung 128 durch zufällig ausgewählte Zeichen ersetzt werden sollen, fest vorgegeben, nicht aber die Stellen selbst.

Das Programmmodul 114 ruft daher den Zufallsgenerator 118 zunächst auf, um zwei der n Stellen der Kennung 128 zufällig auszuwählen, was hier beispielsweise die Stellen 2 und 5 sind. Diese zufällig ausgewählten Stellen 2 und 5 werden in der Zuordnungstabelle 130 von dem Programmmodul 114 gespeichert. Daraufhin ruft das Programmmodul 114 den Zufallsgenerator 118 erneut auf, um für jede der zuvor zufällig ausgewählten Stellen 2 und 5 jeweils ein Zeichen aus dem vordefinierten Zeichensatz auszuwählen, was in dem hier betrachteten Beispiel die Zeichen 8 bzw. 2 sind. Diese werden von dem Programmmodul 114 ebenfalls in der Zuordnungstabelle 130 gespeichert. Schließlich steuert das Programmmodul 114 den Treiber 120 an, um die Zeichenfolge 132 auf dem Display 122 anzuzeigen. Aus dieser Zeichenfolge 132 kann der Nutzer 112 die zufällig ausgewählten Zeichen, hier die Zeichen 8 und 2, sowie deren jeweilige Stelle ablesen. Die weiteren Zeichen, das heißt hier zum Beispiel "X" ignoriert der Nutzer 112, da ihm bekannt ist, dass diese Zeichen nicht zu dem vordefinierten Zeichensatz gehören.

Durch den Ersatz von m Zeichen in der Kennung 128 an den zufällig ausgewählten Stellen, das heißt hier des Zeichens 2 an der zweiten Stelle der Kennung 128 durch das Zeichen 8 bzw. des Zeichens 5 an der fünften Stelle der Kennung 128 durch das Zeichen 2, so wie in der Zeichenfolge 132 angegeben, ist die Zeichenfolge 148 definiert, die der Nutzer 112 über die Tastatur 136 in den Computer 134 eingeben kann. Diese Ziffernfolge 148 wird durch das Anwendungsprogramm 138 über das Lesegerät 106 an das Dokument 100 gesendet, nachdem der Nutzer die Ziffernfolge 148 über die Tastatur 136 eingegeben hat. Diese Übertragung der Ziffernfolge 148 erfolgt über eine geschützte Verbindung, beispielsweise durch Verschlüsselung der zu übertragenden Ziffernfolge 148 mit Hilfe der Ziffernfolge 148 selbst. Das Programmmodul 114 vergleicht dann die empfangene Zeichenfolge 148 mit der Zeichenfolge, welche sich durch Ersetzung der Zeichen in der Kennung 128 gemäß der Zuordnungstabelle 130 ergibt. Stimmen diese Zeichenfolgen überein, d.h. ist die Zeichenfolge 148 korrekt eingegeben worden, so wird der Nutzer 112 authentifiziert und das Programmmodul 114 schaltet die Chipkartenfunktion 110 frei, sodass das Anwendungsprogramm 138 daraufhin die Chipkartenfunktion 110 verwenden kann.

Von besonderem Vorteil ist hierbei, dass es sich bei dem Lesegerät 106 um ein sehr kostengünstiges Klasse 1-Chipkarten-Lesegerät handeln kann, ohne dass dies mit einer Sicherheitseinbuße verbunden ist, insbesondere auch dann, wenn der Computer 134 mit dem öffentlichen Netzwerk 144 verbunden ist.

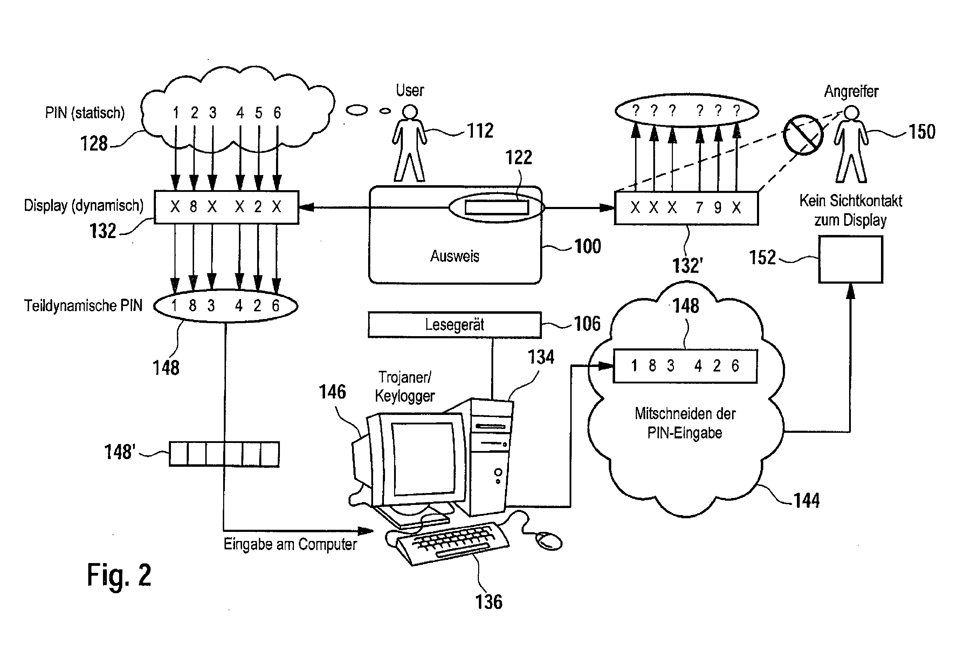

Die Figur 2 zeigt ein entsprechendes Angriffsszenario und dessen Abwehr. Zur Authentifizierung des Nutzers 112 wird auf dem Display 122 des Dokuments 100, wie zum Beispiel einem Ausweis, die Zeichenfolge 132 angezeigt. Der Nutzer 112 ersetzt daraufhin die durch die Zeichenfolge 132 spezifizierten Zeichen seiner Kennung 128, sodass er dadurch die Zeichenfolge 148 erhält. Der Nutzer gibt daraufhin eine Zeichenfolge 148', welche mit der Zeichenfolge 148 identisch sein soll, über die Tastatur 136 in den Computer 134 eingibt.

Der Computer 134 überträgt die eingegebene Zeichenfolge 148' über das Lesegerät 106 zu dem Dokument 100, vorzugsweise wiederum über eine geschützte Verbindung. Wenn der Nutzer 112 die Zeichenfolge 148' korrekt eingegeben hat, diese also mit der Zeichenfolge 148 identisch ist, so gilt er dadurch als authentifiziert. Das Programm 114 (vergleiche Figur 1) löscht nachfolgend die Zuordnungstabelle 130 aus dem flüchtigen Speicher 124.

Für eine nachfolgende weitere Authentifizierung des Nutzers 112 wird in gleicher Weise verfahren, wobei dann andere zufällig ausgewählte Zeichen durch die Zeichenfolge 132 spezifiziert werden, sodass sich auch die vom Nutzer einzugebende Zeichenfolge 148 entsprechend ändert.

Ein Angreifer 150 hat über seinen Computer 152 über das Netzwerk 144, zum Beispiel über das Internet, eine Schadsoftware, wie zum Beispiel einen sogenannten Keylogger, auf den Computer 134 des Nutzers 112 installiert. Der Keylogger dient dazu, Eingaben des Nutzers 112 über die Tastatur 136, insbesondere eine von dem Nutzer 112 über die Tastatur 136 eingegebene PIN, zu erfassen und über das Netzwerk 144 an den Computer 152 des Angreifers 150 zu übertragen.

Wenn der Angreifer 150 versucht, die mit Hilfe des Keyloggers aufgezeichnete Zeichenfolge 148 für eine nachfolgende weitere Authentifizierung zu verwenden, um so unerlaubterweise auf die Chipkartenfunktion 110 zuzugreifen, so gelingt dies nicht. Für eine solche nachfolgende Authentifizierung ändert sich nämlich die Zeichenfolge 132, beispielsweise in die Zeichenfolge 132', welche für die Stelle 4 das zufällige Zeichen 7 und für die Stelle 5 das zufällige Zeichen 9 spezifiziert, sodass dann also für eine erfolgreiche Authentifizierung die Zeichenfolge 123796 einzugeben wäre. Der Authentifizierungsversuch des Angreifers 150 mit Hilfe der Zeichenfolge 148 muss daher fehlschlagen. Da der Angreifer 150 keinen Sichtkontakt zu dem Display 122 hat, besteht für ihn keine Möglichkeit, die korrekte Zeichenfolge für die weitere Authentifizierung zu erfassen, sodass jeder Angriffsversuch ins Leere gehen muss.

Für den Fall, dass an den Computer 136 eine Kamera angeschlossen ist, beispielsweise eine in das Display 146 integrierte Webcam, wird das Lesegerät 106 vorteilhafterweise so positioniert, dass das Display 122 nicht im Erfassungsbereich der Webcam liegt. Hierdurch ist ein zusätzlicher Schutz dagegen geboten, dass der Angreifer 150 etwa eine Schadsoftware auf dem Computer 134 installiert, welche die an den Computer 134 angeschlossene Kamera aktiviert und die aufgenommenen Bilder seinem Computer 152 überträgt.

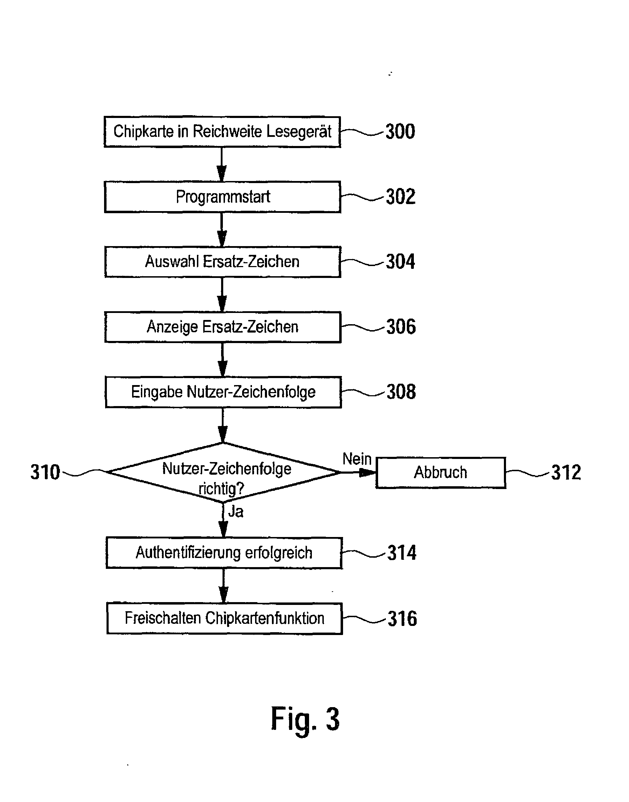

Die Figur 3 zeigt ein entsprechendes Flussdiagramm.

In dem Schritt 300 bringt der Nutzer sein Dokument in die Reichweite des Lesegeräts. Aufgrund der Einkopplung von Energie in das Dokument erfolgt in dem Schritt 302 der Programmstart des Programmmoduls 114 (vergleiche Figur 1). Das Programmmodul 114 wählt daraufhin in dem Schritt 304 mit Hilfe des Zufallsgenerators ein oder mehrere Zeichen aus dem vordefinierten Zeichensatz aus, um damit eine ebensolche Anzahl von Zeichen an vordefinierten oder ebenfalls zufällig ausgewählten Stellen der dem Nutzer bekannten PIN, das heißt der Kennung 128, zu ersetzen. Die betreffenden Ersatzzeichen werden im Schritt 306 von dem Dokument angezeigt sowie auch die betreffenden Stellen, sofern diese nicht vordefiniert sind. In dem Schritt 308 gibt der Nutzer seine auf diese Art und Weise modifizierte Kennung ein, das heißt die Zeichenfolge 148' (vergleiche Figuren 1 und 2). Wenn der Nutzer diese Zeichenfolge 148' richtig eingegeben hat, d.h. wenn diese mit der Zeichenfolge 148 übereinstimmt, was in dem Schritt 310 von dem Dokument überprüft wird, so gilt seine Authentifizierung in dem Schritt 314 als erfolgreich abgeschlossen, sodass die Chipkartenfunktion des Dokuments in dem Schritt 316 freigeschaltet wird. Ergibt dagegen die Prüfung in dem Schritt 310, dass der Nutzer die Zeichenfolge nicht richtig eingegeben hat, so erfolgt in dem Schritt 312 ein Abbruch.

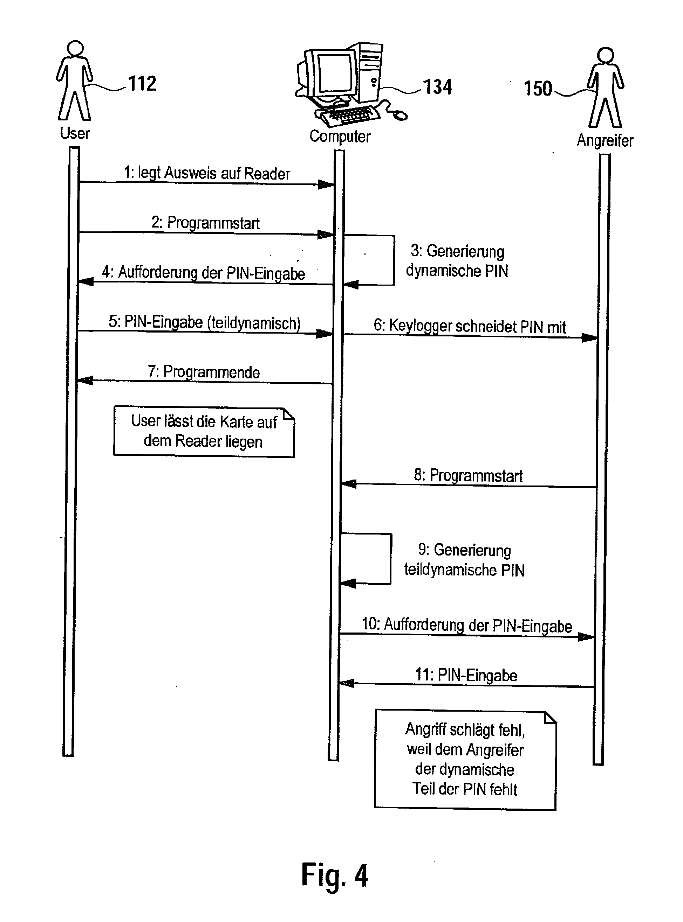

Die Figur 4 zeigt ein entsprechendes Flussdiagramm. In dem Schritt 1 legt der Nutzer 112 ("User"), sein Dokument, das heißt beispielsweise seinen Ausweis, auf das Lesegerät ("Reader"). Aufgrund der Einkopplung von Energie in das Dokument erfolgt daraufhin in dem Schritt 2 automatisch der Programmstart des Programmmoduls 114 (vgl. Figur 1). In dem Schritt 3 generiert das Dokument daraufhin die teildynamische PIN, welche für eine nachfolgende Authentifizierung durch den Nutzer 112 verwendet werden muss, indem nämlich ein oder mehrere Zeichen der Kennung 128 durch über das Display des Dokuments ausgegebene zufällige Zeichen zu ersetzen sind. In dem Schritt 4 erfolgt daraufhin eine Aufforderung zur Eingabe der PIN an den Nutzer 112, wobei die Aufforderung zum Beispiel über das Display 122 oder das Display 146 angezeigt wird. In dem Schritt 5 gibt der Nutzer 112 daraufhin die teildynamische PIN, das heißt die Zeichenfolge 148, in den Computer 134 ein, was in dem Schritt 6 der Angreifer 150 erfassen kann.

Wenn der Nutzer 105 in dem Schritt 5 die teildynamische PIN korrekt eingegeben hat, so wird daraufhin die Chipkartenfunktion freigeschaltet, sodass das Anwendungsprogramm des Computers 134 darauf zugreifen kann. Nach Beendigung des Anwendungsprogramms in dem Schritt 7 lässt der Nutzer 112 sein Dokument im Erfassungsbereich des Lesegeräts, beispielsweise indem er das Dokument auf dem Reader liegen lässt. Wegen der weiterhin eingekoppelten Energie startet daraufhin in dem Schritt 8 das Programmmodul 114 erneut, analog zu dem Schritt 2. In zu Schritt 3 analoger Art und Weise wird dann im dem Schritt 9 eine neue teildynamische PIN generiert und in dem Schritt 10 erfolgt eine Aufforderung zur PIN-Eingabe, die aufgrund der von dem Angreifer 110 zuvor auf dem Computer 134 installierten Schadsoftware von dem Angreifer 150 erfasst wird. Der Angreifer 150 gibt daraufhin in dem Schritt 11 die in dem Schritt 6 erfasste PIN ein. Der entsprechende Authentifizierungsversuch des Angreifers 150 muss dann fehlschlagen, weil die in dem Schritt 6 erfasste PIN mit der in dem Schritt 9 generierten neuen teildynamischen PIN nicht übereinstimmt.

**Bezugszeichenliste**

| | |
|---|---|
| 100 | Dokument |
| 102 | Schnittstelle |
| 104 | Schnittstelle |
| 106 | Lesegerät |
| 108 | Prozessor |
| 110 | Chipkartenfunktion |
| 112 | Nutzer |
| 114 | Programmmodul |
| 116 | Betriebssystem |
| 118 | Zufallsgenerator |
| 120 | Treiber |
| 122 | Display |
| 124 | Speicherbereich |
| 126 | Speicherbereich |
| 128 | Kennung |
| 130 | Zuordnungstabelle |
| 132 | Zeichenfolge |
| 132' | Zeichenfolge |
| 134 | Computer |
| 136 | Eingabevorrichtung |
| 138 | Anwendungsprogramm |
| 140 | Browser |
| 142 | Netzwerk-Schnittstelle |
| 144 | Netzwerk |
| 146 | Display |
| 148 | Zeichenfolge |
| 148' | Zeichenfolge |
| 150 | Angreifer |
| 152 | Computer |

## Patentansprüche

1. Dokument mit einem nicht-flüchtigen Speicherbereich (126) zur Speicherung einer geheimen Kennung, wobei die Kennung eine erste n-stellige Zeichenfolge (128) aus einem vordefinierten Zeichensatz aufweist, mit Zufallsgeneratormitteln (114, 118) zur Auswahl zumindest eines Zeichens aus dem vordefinierten Zeichensatz zur Ersetzung zumindest eines Zeichens der ersten Zeichenfolge, sodass durch diese Ersetzung eine zweite n-stellige Zeichenfolge (148) definiert ist, mit einem flüchtigen Speicherbereich (124) zur Speicherung des zumindest einen ausgewählten Zeichens, mit einer Anzeigevorrichtung (122) zur Anzeige des zumindest einen ausgewählten Zeichens, mit Eingabemitteln (102) zur Eingabe einer dritten Zeichenfolge (148'), mit Prozessormitteln (108, 114) zur Authentifizierung des Nutzers gegenüber dem Dokument, wobei die Prozessormittel dazu ausgebildet sind, auf den nicht-flüchtigen Speicherbereich und den flüchtigen Speicherbereich zuzugreifen, um so die zweite Zeichenfolge (148) zu lesen und die zweiten (148) und dritten (148') Zeichenfolgen auf Übereinstimmung zu prüfen, um den Nutzer zu authentifizieren.

2. Dokument nach Anspruch 1, wobei die Zufallsgeneratormittel so ausgebildet sind, dass eine Anzahl von m Zeichen aus dem vordefinierten Zeichensatz ausgewählt werden, wobei die Differenz aus der Anzahl der Stellen n der ersten Zeichenfolge und der Anzahl m der ausgewählten Zeichen vorzugsweise 4 beträgt, sodass die zweite n-stellige Zeichenfolge durch die Ersetzung einer Anzahl von m Zeichen der ersten Zeichenfolge durch die ausgewählten Zeichen definiert ist.

3. Dokument nach Anspruch 1 oder 2, wobei die Zufallsgeneratormittel zur zufälligen Auswahl derjenigen Stellen der ersten Zeichenfolge ausgebildet sind, deren Zeichen durch die zufällig ausgewählten Zeichen zur Definition der zweiten Zeichenfolge ersetzt werden.

4. Dokument nach Anspruch 3, wobei die Anzeigevorrichtung dazu ausgebildet ist, dem Nutzer die Stellen der ersten Zeichenfolge, deren Zeichen durch die zufällig ausgewählten Zeichen zur Definition der zweiten Zeichenfolge ersetzt werden, zu signalisieren.

5. Dokument nach einem der vorhergehenden Ansprüche, wobei die Zufallsgeneratormittel zur Speicherung einer Zuordnung von jedem der ausgewählten Zeichen zu einer der Stellen der ersten Zeichenfolge, deren Zeichen durch das ausgewählte Zeichen zu ersetzen ist, ausgebildet ist.

6. Dokument nach Anspruch 5, wobei Zufallsgeneratormittel zur Speicherung der Zuordnungen der ausgewählten Zeichen zu jeweils einer Stelle der ersten Zeichenfolge in einer Zuordnungstabelle (130) ausgebildet sind.

7. Dokument nach einem der vorhergehenden Ansprüche, wobei die Anzeigevorrichtung zur Anzeige einer vierten n-stelligen Zeichenfolge (132, 132') ausgebildet ist, wobei die vierte Zeichenfolge an denjenigen Stellen, wo die Zeichen der ersten Zeichenfolge durch die ausgewählten Zeichen zu ersetzen sind, die ausgewählten Zeichen beinhaltet, und an allen anderen Stellen ein Zeichen oder ein Symbol aufweist, welches nicht in dem Zeichensatz beinhaltet ist.

8. Dokument nach einem der vorhergehenden Ansprüche, wobei die Prozessormittel so ausgebildet sind, dass die ausgewählten Zeichen nach der Authentifizierung des Nutzers aus dem flüchtigen Speicherbereich gelöscht werden.

9. Dokument nach einem der vorhergehenden Ansprüche, mit einer drahtlosen Schnittstelle (102) zur Kommunikation mit einem Lesegerät (106) und zur Einkopplung von elektrischer Energie zur Energieversorgung des Dokuments, wobei die Prozessormittel zumindest einen Prozessor (108) und ein Programm (114) beinhalten, wobei die Ausführung des Programms durch den Prozessor automatisch aufgrund der Einkopplung der Energie gestartet wird, wobei das Programm so ausgebildet ist, dass es aufgrund des Programmstarts eine Anforderung an einen Zufallsgenerator (118) richtet, um Zeichen aus dem vordefinierten Zeichensatz auszuwählen und um den Nutzer mit Hilfe der so definierten zweiten Zeichenfolge zu authentifizieren, wobei vorzugsweise das Dokument ein Betriebssystem (116) aufweist, welches den Zufallsgenerator beinhaltet.

10. Dokument nach Anspruch 9 , wobei das Programm dazu ausgebildet ist, mit Hilfe einer von dem Zufallsgenerator ausgegebenen Zufallszahl oder pseudo-Zufallszahl ein Zeichen aus dem Zeichensatz auszuwählen.

11. Dokument nach einem der vorhergehenden Ansprüche, mit einer Chipkartenfunktion (110), die für eine Freischaltung aufgrund einer erfolgreichen Authentifizierung des Nutzers ausgebildet ist.

12. Dokument nach einem der vorhergehenden Ansprüche, wobei es sich bei dem Dokument um ein Ausweisdokument, insbesondere einen Reisepass, Personalausweis, Visum, Führerschein, Firmenausweise, Gesundheitskarte oder andere ID-Dokumente oder einen Fahrzeugschein, Fahrzeugbrief oder ein Zahlungsmittel, insbesondere Banknote, Bankkarte oder Kreditkarte, Frachtbrief oder einen sonstigen Berechtigungsnachweis handelt, wobei das Dokument insbesondere als Chipkarte ausgebildet ist.

13. Verfahren zur Authentifizierung eines Nutzers (112) gegenüber einem Dokument nach einem der vorhergehenden Ansprüche 1 bis 12, mit folgenden Schritten:
- zufällige Auswahl zumindest eines Zeichens aus dem vordefinierten Zeichensatz zur Ersetzung zumindest eines Zeichens, aber nicht aller Zeichen der ersten Zeichenfolge (128) an zumindest einer i-ten Stelle der ersten Zeichenfolge, sodass dadurch die zweite Zeichenfolge (148) definiert ist,
- Anzeige des zumindest einen zufällig ausgewählten Zeichens auf der Anzeigevorrichtung,
- Empfang der dritten Zeichenfolge (148'),
- Prüfung, ob die dritte Zeichenfolge mit der zweiten Zeichenfolge übereinstimmt, und wenn dies der Fall ist, Erzeugung eines Authentifizierungssignals zur Signalisierung einer erfolgreichen Authentifizierung des Nutzers.

14. Verfahren nach Anspruch 13, wobei die Anzahl und/oder Anordnung der Stellen der ersten Zeichenfolge deren Zeichen durch jeweils ein zufällig ausgewähltes Zeichen ersetzt werden sollen, zufällig ausgewählt werden, wobei die Zuordnung eines zufällig ausgewählten Zeichens zu einer der Stellen der ersten Zeichenfolge deren Zeichen durch das betreffende zufällig ausgewählte Zeichen ersetzt wird, in dem flüchtigen Speicherbereich gespeichert wird, wobei vorzugsweise die Zuordnungen der ausgewählten Zeichen zu den Stellen der ersten Zeichenfolge und die ausgewählten Zeichen auf der Anzeigevorrichtung ausgegeben werden.

15. Computersystem mit einem Computer (134), einem Dokument (100) nach einem der Ansprüche 1 bis 12 und einem Lesegerät (106) für das Dokument, wobei auf dem Computer ein Anwendungsprogramm (138) zur Interaktion mit dem Dokument installiert ist, und wobei der Computer eine Eingabevorrichtung (136) aufweist, über die der Nutzer die dritte Zeichenfolge in den Computer zur Weiterleitung an das Dokument über das Lesegerät eingeben kann, wobei vorzugsweise der Computer ein Browserprogramm (140) und eine Netzwerk-Schnittstelle (142) zur Verbindung mit einem öffentlichen Computernetzwerk (144) aufweist.

## Claims

1. A document having a non-volatile memory area (126) for storing a secret identifier, wherein the identifier has a first n-digit character sequence (128) from a predefined character set, having random generator means (114, 118) for selecting at least one character from the predefined character set for replacement of at least one character of the first character sequence, such that a second n-digit character sequence (148) is defined as a result of this replacement, having a volatile memory area (124) for storing the at least one selected character, having a display device (122) for displaying the at least one selected character, having input means (102) for inputting a third character sequence (148'), having processor means (108, 114) for authenticating the user to the document, wherein the processor means is configured to access the non-volatile memory area and the volatile memory area in order to thus read the second character sequence (148) and to check for a match between the second (148) and third (148') character sequences in order to authenticate the user.

2. The document according to Claim 1, wherein the random generator means are configured such that a number of m characters from the predefined character set are selected, wherein the difference from the number of positions n within the first character sequence and the number m of selected characters is preferably 4, such that the second n-digit character sequence is defined by the replacement of a number of m characters of the first character sequence by the selected characters.

3. The document according to Claim 1 or 2, wherein the random generator means are configured to randomly select those positions within the first character sequence of which the characters are replaced by the randomly selected characters in order to define the second character sequence.

4. The document according to Claim 3, wherein the display device is configured to signal to the user the positions within the first character sequence of which the characters are replaced by the randomly selected characters in order to define the second character sequence.

5. The document according to one of the preceding claims, wherein the random generator means is configured to store an assignment of each of the selected characters to one of the positions within the first character sequence of which the character is to be replaced by the selected character.

6. The document according to Claim 5, wherein random generator means are configured to store in an assignment table (130) the assignments of each selected character to a position within the first character sequence.

7. The document according to one of the preceding claims, wherein the display device is configured to display a fourth n-digit character sequence (132, 132'), wherein the fourth character sequence contains the selected characters at those positions where the characters of the first character sequence are to be replaced by the selected characters, and at all other positions has a character or a symbol not included in the character set.

8. The document according to one of the preceding claims, wherein the processor means are configured such that the selected characters are deleted from the volatile memory area following the authentication of the user.

9. The document according to one of the preceding claims, having a wireless interface (102) for communication with a reader (106) and for coupling in electrical energy for the energy supply of the document, wherein the processor means comprise at least one processor (108) and a program (114), wherein the execution of the program is started by the processor automatically due to the coupling in of the energy, wherein the program is configured such that it directs a request to a random generator (118) on account of the program start in order to select characters from the predefined character set and in order to authenticate the user with the aid of the second character sequence thus defined, wherein the document preferably has an operating system (116) which comprises the random generator.

10. The document according to Claim 9, wherein the program is configured to select a character from the character set with the aid of a random number or pseudo random number output by the random generator.

11. The document according to one of the preceding claims, having a chip card function (110), which is configured for release on account of a successful authentication of the user.

12. The document according to one of the preceding claims, wherein the document is an identification document, in particular a passport, personal identity card, visa, driver's licence, company identification document, health insurance card or other ID documents or a vehicle certificate, vehicle registration document or payment means, in particular banknote, bank card or credit card, consignment note or another proof of authority, wherein the document is configured in particular as a chip card.

13. A method for authenticating a user (112) to a document according to one of preceding Claims 1 to 12, comprising the following steps:
- randomly selecting at least one character from the predefined character set for replacement of at least one character, but fewer than all characters, of the first character sequence (128) at least at one i^{th} position within the first character sequence, such that the second character sequence (148) is defined as a result,
- displaying the at least one randomly selected character on the display device,
- receiving the third character sequence (148'),
- checking whether the third character sequence matches the second character sequence, and, if so, generating an authentication signal for signalling a successful authentication of the user.

14. The method according to Claim 13, wherein the number and/or arrangement of the positions within the first character sequence of which the characters are to be replaced in each case by a randomly selected character are selected randomly, wherein the assignment of a randomly selected character to one of the positions within the first character sequence of which the character is replaced by the randomly selected character in question is stored in the volatile memory area, wherein the assignments of the selected characters to the positions within the first character sequence and the selected characters are preferably output on the display device.

15. A computer system having a computer (134), a document (100) according to one of Claims 1 to 13 and a reader (106) for the document, wherein an application program (138) for interaction with the document is installed on the computer, and wherein the computer has an input device (136), via which the user can input the third character sequence into the computer for forwarding to the document via the reader, wherein the computer preferably has a browser program (140) and a network interface (142) for connection to a public computer network (144).

## Revendications

1. Document avec une zone de mémoire (126) non volatile pour le stockage d'un identifiant secret, dans lequel l'identifiant présente une première suite de caractères à n positions (128) provenant d'un jeu de caractères prédéfinis, avec des moyens de génération aléatoire (114, 118) pour le choix d'au moins un caractère du jeu de caractères prédéfinis pour le remplacement d'au moins un caractère de la première suite de caractères, de sorte que, par ce remplacement, se trouve définie une deuxième suite de caractères à n positions (148), avec une zone de mémoire (124) volatile pour le stockage de l'au moins un caractère choisi, avec un dispositif d'affichage (122) pour l'affichage de l'au moins un caractère choisi, avec des moyens d'entrée (102) pour la saisie d'une troisième suite de caractères (148'), avec des moyens de processeur (108, 114) pour l'authentification de l'utilisateur par rapport au document, dans lequel les moyens de processeur sont conçus pour se servir de la zone de mémoire non volatile et de la zone de mémoire volatile afin de lire ainsi la deuxième suite de caractères (148) et vérifier les deuxième (148) et troisième (148') suites de caractères concernant leur concordance afin d'authentifier l'utilisateur.

2. Document selon la revendication 1, dans lequel les moyens de génération aléatoire sont ainsi conçus qu'un certain nombre de m caractères est choisi à partir du jeu de caractères prédéfini, dans lequel la différence entre le nombre des positions n de la première suite de caractères et le nombre m des caractères choisis est de préférence de 4, de sorte que la deuxième suite de caractères à n positions est définie par le remplacement d'un nombre de m caractères de la première suite de caractères par les caractères choisis.

3. Document selon les revendications 1 ou 2, dans lequel les moyens de génération aléatoire sont conçus pour le choix au hasard des positions de la première suite de caractères dont les caractères sont remplacés par les caractères choisis au hasard pour la définition de la deuxième suite de caractères.

4. Document selon la revendication 3, dans lequel le dispositif d'affichage est conçu pour signaler à l'utilisateur les positions de la première suite de caractères dont les caractères sont remplacés par les caractères choisis au hasard pour la définition de la deuxième suite de caractères.

5. Document selon l'une des revendications précédentes, dans lequel les moyens de génération aléatoire sont conçus pour le stockage d'une affectation de chacun des caractères choisis à une des positions de la première suite de caractères dont le caractère est à remplacer par le caractère choisi.

6. Document selon la revendication 5, dans lequel des moyens de génération aléatoire sont conçus pour le stockage des affectations des caractères choisis chaque fois à une position de la première suite de caractères dans un tableau de correspondance (130).

7. Document selon l'une des revendications précédentes, dans lequel le dispositif d'affichage est conçu pour l'affichage d'une quatrième suite de caractères à n positions (132, 132'), dans lequel la quatrième suite de caractères conserve les caractères choisis aux positions où les caractères de la première suite de caractères sont remplacés par les caractères choisis, et présente un caractère ou un symbole, lequel n'est pas contenu dans le jeu de caractères, à toutes les autres positions.

8. Document selon l'une des revendications précédentes, dans lequel les moyens de processeur sont ainsi conçus que les caractères choisis sont effacés après l'authentification de l'utilisateur à partir de la zone de mémoire volatile.

9. Document selon l'une des revendications précédentes, avec une interface (102) sans fil pour la communication avec un appareil de lecture (106) et pour le branchement d'énergie électrique pour l'alimentation en énergie du document, dans lequel les moyens de processeur contiennent au moins un processeur (108) et un programme (114), dans lequel l'exécution du programme est démarrée automatiquement par le processeur en raison du branchement de l'énergie, dans lequel le programme est ainsi conçu qu'il adresse une demande à un générateur aléatoire (118) en raison du démarrage du programme, afin de choisir des caractères à partir d'un jeu de caractères prédéfini et pour authentifier l'utilisateur au moyen de la deuxième suite de caractères ainsi définie, dans lequel le document présente de préférence un système d'exploitation (116), lequel contient le générateur aléatoire.

10. Document selon la revendication 9, dans lequel le programme est conçu pour choisir un caractère du jeu de caractères à l'aide d'un nombre aléatoire ou d'un nombre pseudo aléatoire délivré par le générateur aléatoire.

11. Document selon l'une des revendications précédentes, avec une fonction carte à puce (110) qui est conçue pour une activation en raison d'une authentification de l'utilisateur réussie

12. Document selon l'une des revendications précédentes, dans lequel il s'agit d'un document d'identité dans le cas du document, notamment un passeport, une carte d'identité, un visa, un permis de conduire, des cartes d'entreprises, une carte de santé ou d'autres documents d'ID ou un certificat d'immatriculation de véhicule, une carte grise de véhicule ou un moyen de paiement, notamment un billet de banque, une carte bancaire ou une carte de crédit, un bordereau d'expédition ou un autre certificat de qualification, dans lequel le document est notamment conçu sous la forme d'une carte à puce.

13. Procédé pour l'authentification d'un utilisateur (112) par rapport un document selon l'une des revendications précédentes 1 à 12, avec les étapes suivantes :
- choix aléatoire d'au moins un caractère à partir d'un jeu de caractères prédéfini pour le remplacement d'au moins un caractère, mais non de tous les caractères, de la première suite de caractères (128) à au moins une j^{ème} position de la première suite de caractères, de sorte que la deuxième suite de caractères (148) est ainsi définie,
- affichage de l'au moins un caractère choisi au hasard sur le dispositif d'affichage,
- réception de la troisième suite de caractères (148'),
- contrôle si la troisième suite de caractères concorde avec la deuxième suite de caractères, et si tel est le cas, génération d'un signal d'authentification pour la signalisation d'une authentification de l'utilisateur réussie.

14. Procédé selon la revendication 13, dans lequel le nombre et/ou l'affectation des positions de la première suite de caractères dont chaque fois les caractères doivent être remplacés par un caractère choisi au hasard, peuvent être choisis au hasard, dans lequel l'affectation d'un caractère pour une des positions de la première suite de caractères dont le caractère est remplacée par un caractère choisi au hasard est stockée dans la zone de mémoire volatile, dans lequel les affectations des caractères choisis pour les positions de la première suite de caractères et les caractères choisis sont de préférence délivrés sur le dispositif d'affichage.

15. Système informatique avec un ordinateur (134), un document (100) selon l'une des revendications 1 à 12, et un appareil de lecture (106) pour le document, dans lequel un programme d'application (138) pour une interaction avec le document est installé sur l'ordinateur, et dans lequel l'ordinateur présente un dispositif d'entrée (136) par lequel l'utilisateur peut indiquer la troisième suite de caractères dans l'ordinateur pour une transmission ultérieure vers le document par l'intermédiaire de l'appareil de lecture, dans lequel l'ordinateur présente de préférence un programme de navigateur (140) et une interface réseau (142) pour une communication avec un réseau d'ordinateurs publics (144).
